# FASCICULE DE BREVET EUROPEEN

(11) **EP 3 959 588 B1**
(45) Date de publication et mention de la délivrance du brevet: **06.11.2024**
(21) Numéro de dépôt: 20730447.8
(22) Date de dépôt: 24.04.2020
(51) Int. Cl.: G06F 3/01, G06F 3/041, G06F 3/0354, G06F 3/039

(54) **DISPOSITIF DE COMMANDE 3D A RETOUR HAPTIQUE**
3D-STEUERUNGSVORRICHTUNG MIT HAPTISCHEM FEEDBACK
3D CONTROL DEVICE WITH HAPTIC FEEDBACK

(30) Priorité: 25.04.2019 FR 1904383
(43) Date de publication de la demande: 02.03.2022
(73) Titulaire: Hap2u, 38400 Saint-Martin-d'Hères (FR)
(72) Inventeur: CHAPPAZ, Cedrick, 38400 SAINT MARTIN D'HERES (FR); RUPIN, Matthieu, 38400 SAINT MARTIN D'HERES (FR)
(74) Mandataire: Tranvouez, Edern Morgan
(86) Numéro de dépôt international: PCT/FR2020/000150
(87) Numéro de publication internationale: WO 2020/217008

(56) Documents cités:
- EP-A1- 3 073 355
- WO-A1-2018/197794
- WO-A2-2015/200726
- DE-A1- 102016 121 076
- US-A1- 2012 256 862
- US-A1- 2018 364 853
- US-B1- 9 671 954

## Description

### DOMAINE DE L'INVENTION

L'invention concerne les interfaces de commande à retour haptique, pour une application notamment, mais pas exclusivement, dans le domaine des équipements industriels, ou dans le domaine automobile.

### ETAT DE LA TECHNIQUE

Les commandes manuelles consistent actuellement principalement en divers types de boutons mécaniques, ou en écrans tactiles 2D associés à des actionneurs mécaniques.

La plupart des organes de commande manuels dans le domaine industriel, tels que les molettes de commande, boutons, curseurs, nécessitent des éléments mécaniques mobiles intégrés dans l'objet ou la machine à commander afin de permettre une rotation de l'organe de commande ou bien un déplacement longitudinal suivant un axe. Ces organes de commande manuels tels que les molettes, curseurs ou autres comprennent généralement une partie mobile via un système de roulement à bille, un rail mobile, ou un fluide magnétorhéologique (matériau dont la rigidité dépend du champ magnétique appliqué).

Ces dispositifs connus mettent donc en oeuvre des éléments mobiles mécaniques, qui sont coûteux à réaliser, et dont l'usure due à l'usage limite la durée de vie, ce qui nécessite des opérations de remplacement ou de maintenance coûteuses.

Un exemple d'un tel organe de commande connu est décrit dans le document DE 10 2016 121076 A1 dans le cadre d'un tableau de bord de voiture. Il comporte un support fixe solidaire du tableau de bord ou d'un cadre fixé au tableau de bord, un élément rotatif posé sur le support, et un afficheur alimenté en énergie électrique par induction. L'ensemble est complexe et comporte un grand nombre de pièces, dont plusieurs y compris l'afficheur sont mobiles par rapport au tableau de bord. Le support recevant l'élément rotatif n'est pas une surface à retour haptique et ne présente pas d'effet de lubrification ultrasonique.

On connaît aussi de par le document US 9,671,954 B1 une interface tactile qui fait appel à des boutons qui sont intrinsèquement et physiquement texturés, et qui ne sont pas soumis à une quelconque vibration, encore moins à un effet de lubrification ultrasonique. Ces boutons sont ouverts au centre pour guider le doigt de l'utilisateur. En outre, ces boutons peuvent être mobiles, notamment rotatifs par rapport à leur support.

On connaît par ailleurs de par le document US 2012/256862 A1 un ensemble de cadres pouvant être fixés de manière amovible sur un écran tactile, de façon à procurer un guidage d'un doigt vers une zone spécifique de cet écran, sans avoir à regarder l'écran. Ces cadres ne sont pas destinés à être mis en vibration et ne peuvent donc pas constituer une interface tactile tridimensionnelle, fixe et vibrante, comme celle recherchée dans le cadre de la présente invention.

On connaît en outre de par le document US 2018/0364853 A1 un système permettant à un utilisateur d'interagir avec des objets virtuels d'un environnement immersif. Ce système comporte un organe physique ou « overlay » disposé au-dessus d'une surface à retour haptique, comme celle d'un téléphone portable. Cependant, ce système est conçu pour produire deux effets bien différenciés, à savoir d'une part un retour tactile par l'intermédiaire de l'organe physique, et d'autre part un effet de retour haptique « virtuel », par l'intermédiaire de la surface à retour haptique. L'organe physique ou « overlay » est découplé de la surface à retour haptique, de sorte que les deux effets sont différenciés et indépendants. Ce système n'est donc pas apte à communiquer directement un effet de retour haptique de type « squeeze film » à l'overlay à partir de la surface à retour haptique sur laquelle il repose.

Le document EP 3 073 355 A1 décrit un système pour transmettre un signal électrique à un détecteur à partir d'une surface tridimensionnelle irrégulière comportant au moins un point électriquement conducteur. Ce système ne concerne pas la transmission d'un effet de lubrification ultrasonique à un organe de commande tridimensionnel.

Le document WO 2018/197794 A1 (CEA) décrit une surface tactile pourvue de capteurs tactiles et apte à être mise en vibration à une fréquence ultrasonique par des actionneurs électromécaniques commandés par une électronique de pilotage de façon à générer sur ladite surface tactile un effet de lubrification ultrasonique. Mais ce document ne décrit pas une interface tactile tridimensionnelle fixe et solidaire de la surface tactile et configurée pour communiquer les vibrations de l'effet de lubrification ultrasonique de la surface tactile au doigt d'un utilisateur par l'intermédiaire de l'interface tactile tridimensionnelle.

### BUT DE L'INVENTION

L'invention a notamment pour but général de proposer un organe de commande qui soit dépourvu des inconvénients présentés par les dispositifs de commande connus.

Un autre but spécifique de l'invention est de proposer un dispositif de commande capable à terme de supprimer la plupart des molettes et curseurs comportant des parties mécaniques mobiles, tels que des roulements à bille ou équivalent.

Un autre but de l'invention est de proposer une interface de commande tactile à retour haptique, qui soit tangible, c'est-à-dire qui présente une structure tridimensionnelle facile à manipuler par les doigts d'un utilisateur.

L'interface de commande visée doit en outre être interactive, c'est-à-dire capable de transmettre des informations à l'utilisateur sous forme de retour haptique, et prendre les informations de commande de l'utilisateur pour les transmettre au dispositif à commander.

Un autre but de l'invention est de proposer un organe de commande modulable, qui puisse aisément être adapté par simple programmation à plusieurs types de dispositifs à commander.

### RESUME DE L'INVENTION

Dans son principe, l'invention consiste à proposer un organe de commande tridimensionnel (noté 3D) associé à une surface à retour haptique pourvue d'actionneurs électromécaniques et de capteurs.

L'organe de commande tridimensionnel est fixe et rendu solidaire avec la surface à retour haptique au moyen d'un adhésif double face ou d'une colle polymère de type époxy par exemple. L'adhésif est choisi pour transmettre à l'organe de commande 3D une vibration ultrasonique permettant de moduler un effet de lubrification ultrasonique (effet dit « squeeze film ») entre la surface à retour haptique et l'organe de commande 3D.

L'invention a donc pour objet un dispositif de commande à retour haptique comportant une plaque vibrante présentant une surface tactile pourvue de capteurs tactiles et apte à être mise en vibration à une fréquence ultrasonique par des actionneurs électromécaniques commandés par une électronique de pilotage de façon à générer sur ladite surface tactile un effet de lubrification ultrasonique, caractérisé en ce qu'il comporte une interface tactile tridimensionnelle fixe, solidaire de ladite surface tactile, et dépourvue de tout élément mobile, ladite interface tactile tridimensionnelle étant fixée sur ladite surface tactile au moyen d'un adhésif choisi pour communiquer les vibrations de l'effet de lubrification ultrasonique de ladite surface tactile au doigt d'un utilisateur par l'intermédiaire de ladite interface tactile tridimensionnelle.

De cette manière, l'utilisateur peut percevoir la modulation de l'effet de lubrification ultrasonique directement sur l'interface tactile en relief, bien tangible.

Selon l'invention, et de façon surprenante, ladite interface tactile tridimensionnelle est un élément purement passif, dépourvu de tout composant électronique et de tout élément mobile.

Selon un mode de réalisation, l'interface tactile tridimensionnelle est en bois, en matière plastique rigide, ou en métal.

Selon un mode de réalisation, l'interface tactile 3D est fixée sur la surface au moyen d'un adhésif rigide ou mou, notamment un adhésif viscoélastique double face, ou une résine adhésive.

L'adhésif choisi présente par exemple un module d'Young compris entre 50 MPa et 5 GPa à température ambiante et pour une fréquence vibratoire comprise entre 20 kHz et 200 kHz.

L'interface tactile 3D peut présenter une grande variété de formes, notamment la forme d'un bouton cylindrique, conique ou tronconique, ou la forme d'un curseur fixe parallélépipédique le long duquel un doigt d'un utilisateur peut se déplacer, ou la forme d'un curseur fixe à double rail de guidage, ou encore la forme d'un curseur fixe concave le long duquel un doigt peut se déplacer.

L'interface tactile 3D peut être réalisée dans divers matériaux, notamment en bois, en matière plastique rigide, ou en métal.

Selon un mode de réalisation avantageux, les actionneurs électromécaniques faisant vibrer la surface tactile sont constitués par des céramiques piézoélectriques commandées à des fréquences ultrasoniques comprises entre 20 kHz et 200 kHz.

Selon un mode de réalisation, l'interface tactile tridimensionnelle comporte des fils ou des pistes électriques disposés de manière que leur variation de capacité lors du contact d'un doigt d'un utilisateur puisse être détectée par des capteurs tactiles capacitifs intégrés à la surface tactile 5.

### DESCRIPTION DETAILLEE

L'invention sera décrite plus en détail à l'aide des figures, dans lesquelles :
- La figure 1 est un schéma de principe du dispositif de commande selon l'invention, en vue de côté ;
- La figure 2 est un schéma de principe du dispositif de commande de la figure 1, en vue de dessus ;
- La figure 3 représente des vues de dessus et de côté de trois variantes de réalisation du dispositif de commande selon l'invention.

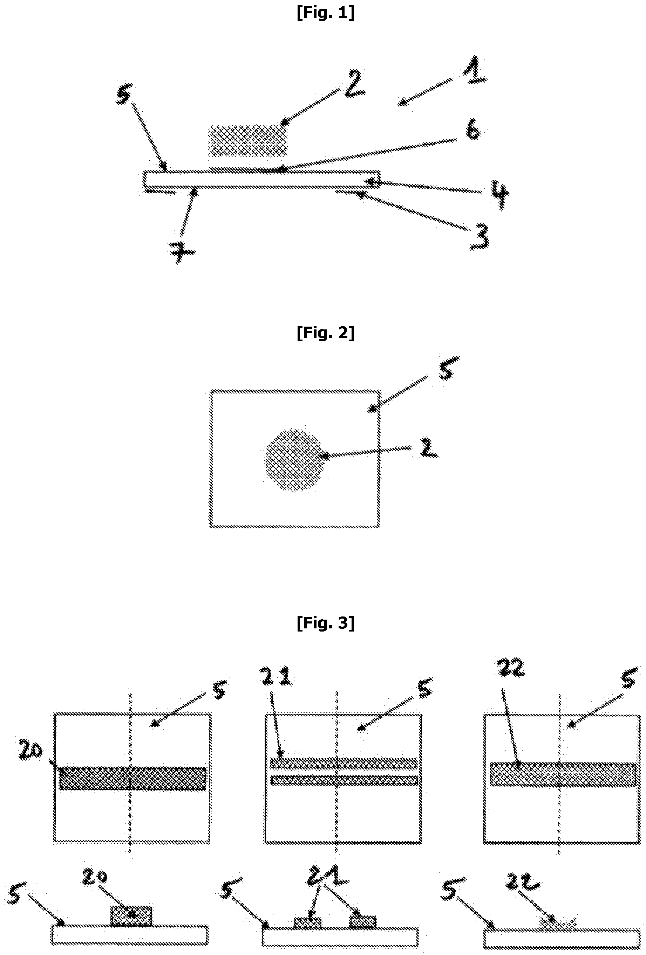

On se réfère à la figure 1. Le dispositif 1 selon l'invention comporte une plaque vibrante 4 présentant une surface tactile 5 à retour haptique, actionnée pas des actionneurs électromécaniques 3 à une fréquence vibratoire ultrasonique pour y créer des ondes de Lamb stationnaires, comme cela est connu et décrit par exemple dans le document WO 2008/116980 A1.

Comme décrit dans le document précité, une plaque vibrante 4 est actionnée par une couche piézoélectrique 3 fixée contre l'autre face 7 de la plaque vibrante 4, opposée à la surface tactile 5.

Une telle structure présente au moins un mode de flexion caractérisé par une fréquence de résonance qui est comprise entre 20 kHz et 200 kHz, et des moyens d'alimentation électrique (non représentés) qui sont connectés à la couche piézoélectrique 3.

La couche piézoélectrique 3 et les moyens d'alimentation électrique sont adaptés pour exciter un mode de flexion de la surface tactile 5 vibrante et y générer des ondes de Lamb stationnaires ayant une amplitude de l'ordre du micromètre.

De façon connue, la surface tactile 5 permet de reproduire de façon perceptible par un doigt des textures ou rugosités très fines en modulant l'effet dit de lubrification ultrasonique, encore appelé effet de « squeeze film » en terminologie anglo-saxonne, en jouant sur le coefficient de friction entre le doigt et la surface tactile 5, ce qui permet de modifier la sensation tactile de toucher de la surface de contact.

Dans certains environnements applicatifs, comme par exemple ceux des équipements industriels ou dans le domaine automobile, il serait plus pratique d'obtenir un effet de retour haptique par modulation de friction par lubrification ultrasonique, non pas sur une surface tactile plane, mais sur un élément 3D plus classique.

Cependant, le fait de simplement doter une plaque vibrante plane 4 d'une excroissance 3D modifie complètement la vibration de la plaque, et en particulier supprime l'effet de retour haptique par lubrification ultrasonique dans la plaque en détruisant l'onde de Lamb stationnaire. Ainsi, un effet de retour haptique par lubrification ultrasonique uniforme (même intensité en tout point de l'élément) peut éventuellement être généré dans l'élément 3D par excitation d'un mode localisé dans cet élément mais pas simultanément dans la plaque. Pour remédier à cela, il a été constaté que la fixation d'un simple élément tridimensionnel purement passif sur la surface tactile d'une plaque vibrante à l'aide d'un adhésif spécifique permettait de limiter l'impact de la présence du bouton 3D sur le mode vibratoire de la surface tactile tout en permettant la transmission de la vibration ultrasonique de la plaque à l'élément 3D.

La figure 1 représente un schéma de principe d'un mode de réalisation du dispositif de commande selon l'invention, utilisant un bouton tridimensionnel 2 fixé sur une surface tactile 5 d'une plaque vibrante 4 (à savoir la face supérieure de la plaque 4 dans l'exemple représenté) à l'aide d'une couche adhésive 6 interposée entre la surface tactile 5 et le bouton tridimensionnel 2.

Pour simplifier l'exposé, on désignera l'interface tactile 3D 2 par le terme de « bouton 3D », couvrant en pratique tout organe de commande fixe tridimensionnel, de type molette, bouton, curseur, ou équivalent.

Le signal de commande des actionneurs piézoélectriques 3 doit prendre en compte la rigidité amenée par le bouton 3D 2 ainsi que le comportement viscoélastique de l'adhésif 6. L'adhésif 6 est choisi pour ses propriétés mécaniques de façon à transmettre au le bouton 3D le déplacement vertical de la surface tactile 5 rigide sans amortissement significatif.

Les collages compatibles sont ceux réalisés à l'aide d'adhésifs double-face ou de résines qui permettent de coller des matériaux différents. On en trouve par exemple dans les écrans tactiles pour lier les différentes couches de l'afficheur et du capteur tactile entre elles. Ils ont typiquement un module d'Young compris entre 50 MPa et 5 GPa, à température ambiante. Mais il peut aussi s'agir d'un adhésif très rigide, par exemple de type époxy.

Selon l'invention, le bouton 3D 2 doit être fabriqué dans un matériau rigide compatible avec l'établissement d'un mode de résonance de type onde de Lamb A0 : métal, verre, bois, plastique rigide, ou équivalent.

La perception de la vibration de la surface tactile 5 à la surface du bouton 3D 2 est possible même pour un bouton entièrement passif, dépourvu de tout composant électronique, de toute alimentation électrique, et de tout élément mobile.

Cependant, afin que le mouvement d'un doigt d'un utilisateur sur le bouton 3D puisse être détecté par la surface tactile 5 à retour haptique et transmis à l'électronique de l'équipement connecté à la surface haptique (non représenté), il est nécessaire que la surface tactile 5 puisse détecter un signal lié au déplacement du doigt sur le bouton 3D. Dans ce cas, il peut être utile de disposer sur ou dans le bouton 3D 2 des fils ou des pistes électriques dont la variation de capacité pourra être détectée par des capteurs tactiles capacitifs, qui peuvent être intégrés à la surface tactile 5. Tout se passe alors comme si l'utilisateur posait directement le doigt sur la surface tactile 5 à retour haptique.

L'effet recherché par l'invention n'est pas limité par une géométrie particulière du bouton 3D. En figure 3 on a représenté en vue de dessus et en vue de côté 3 exemples de boutons 3D, qui reproduisent des formes usuelles de boutons 3D connus dans l'état de la technique, à savoir : un bouton 20 en forme de barre parallélépipédique, un double curseur 21 longitudinal, ou un curseur 22 en forme de goulotte concave, qui permet de guider le doigt de l'utilisateur sans même que celui-ci n'ait à regarder le dispositif.

### AVANTAGES DE L'INVENTION

L'invention réponds aux buts fixés.

En particulier, elle permet de fiabiliser les boutons de contrôle en supprimant leurs pièces mécaniques mobiles. Elle permet de doter des surfaces à retour haptique par lubrification ultrasonique d'un organe de commande 3D, bien tangible, et interactif, bien que fixe par rapport à la surface à retour haptique.

Le dispositif de commande selon l'invention permet aussi de faciliter la conception de nouvelles interfaces tactiles, l'utilisateur n'aura qu'à programmer la surface tactile pour pouvoir implanter le bouton 3D dans une zone souhaitée de la surface tactile.

Enfin, le dispositif de commande selon l'invention est particulièrement économique à mettre en oeuvre, puisqu'il n'implique que l'utilisation d'un bouton solide rigide et d'un adhésif.

## Revendications

1. Dispositif de commande (1) à retour haptique, comportant une plaque vibrante (4) présentant une surface tactile (5) pourvue de capteurs tactiles et apte à être mise en vibration à une fréquence ultrasonique par des actionneurs électromécaniques (3) commandés par une électronique de pilotage de façon à générer sur ladite surface tactile (5) un effet de lubrification ultrasonique, **caractérisé en ce qu'**il comporte une interface tactile tridimensionnelle (2) fixe, solidaire de ladite surface tactile (5), et dépourvue de tout élément mobile, ladite interface tactile tridimensionnelle (2) étant fixée sur ladite surface tactile (5) au moyen d'un adhésif (6) choisi pour communiquer les vibrations de l'effet de lubrification ultrasonique de ladite surface tactile (5) au doigt d'un utilisateur par l'intermédiaire de ladite interface tactile tridimensionnelle (2).

2. Dispositif de commande (1) selon la revendication 1, **caractérisé en ce que** ladite interface tactile tridimensionnelle (2) est un élément passif, dépourvu de tout composant électronique.

3. Dispositif de commande (1) selon l'une des revendication précédentes, **caractérisé en ce que** l'interface tactile tridimensionnelle (2 ; 20 ; 21 ; 22) est en bois, en matière plastique rigide, ou en métal.

4. Dispositif de commande (1) selon l'une des revendications 1 à 3, **caractérisé en ce que** l'adhésif (6) est un adhésif double face ou une résine adhésive.

5. Dispositif de commande (1) selon l'une des revendications précédentes, **caractérisé en ce que** l'adhésif (6) présente un module d'Young compris entre 50 MPa et 5 GPa à une température ambiante et à une fréquence vibratoire comprise entre 20 kHz et 200 kHz.

6. Dispositif de commande (1) selon l'une des revendications précédentes, **caractérisé en ce que** l'interface tactile tridimensionnelle (2) se présente sous la forme d'un bouton fixe cylindrique, conique ou tronconique.

7. Dispositif de commande (1) selon l'une des revendications précédentes, **caractérisé en ce que** l'interface tactile tridimensionnelle (2) se présente sous la forme d'un curseur fixe (20) parallélépipédique le long duquel un doigt d'un utilisateur peut se déplacer.

8. Dispositif de commande (1) selon l'une des revendications précédentes, **caractérisé en ce que** l'interface tactile tridimensionnelle (2) se présente sous la forme d'un curseur fixe (21) à double rail de guidage.

9. Dispositif de commande (1) selon l'une des revendications précédentes, **caractérisé en ce que** l'interface tactile tridimensionnelle (2) se présente sous la forme d'un curseur fixe concave (22) le long duquel un doigt peut se déplacer.

10. Dispositif de commande (1) selon l'une des revendications précédentes, **caractérisé en ce que** les actionneurs électromécaniques (3) sont constitués par des céramiques piézoélectriques commandées à des fréquences ultrasoniques comprises entre 20 kHz et 200 kHz.

11. Dispositif de commande (1) selon l'une quelconque des revendications 3 à 10, **caractérisé en ce que** l'interface tactile tridimensionnelle (2) comporte des fils ou des pistes électriques disposés de manière que leur variation de capacité lors du contact d'un doigt d'un utilisateur puisse être détectée par des capteurs tactiles capacitifs intégrés la surface tactile (5).

## Patentansprüche

1. Steuergerät (1) mit haptischer Rückmeldung, mit einer Vibrationsplatte (4), die eine taktile Oberfläche (5) aufweist, die mit taktilen Sensoren versehen ist und geeignet ist, mit einer Ultraschallfrequenz durch elektromechanische Aktuatoren (3) in Schwingung versetzt zu werden, die durch eine Kontrollelektronik so gesteuert werden, dass auf der taktilen Oberfläche (5) ein Ultraschallschmiereffekt erzeugt wird, **dadurch gekennzeichnet, dass** es eine feste dreidimensionale Berührungsschnittstelle (2) umfasst, die mit der Berührungsoberfläche (5) fest verbunden ist und kein bewegliches Element aufweist, wobei die dreidimensionale Berührungsschnittstelle (2) an der Berührungsoberfläche (5) mittels eines Klebstoffs (6) befestigt ist, der ausgewählt ist, um die Vibrationen des Ultraschallschmiereffekts der Berührungsoberfläche (5) über die dreidimensionale Berührungsschnittstelle (2) auf den Finger eines Benutzers zu übertragen.

2. Steuergerät (1) nach Anspruch 1, **dadurch gekennzeichnet, dass** die dreidimensionale Berührungsschnittstelle (2) ein passives Element ist, das keine elektronischen Komponenten enthält.

3. Steuergerät (1) nach einem der vorstehenden Ansprüche, **dadurch gekennzeichnet, dass** die dreidimensionale Berührungsschnittstelle (2; 20; 21; 22) aus Holz, einem harten Kunststoff oder aus Metall besteht.

4. Steuergerät (1) nach einem der Ansprüche 1 bis 3, **dadurch gekennzeichnet, dass** der Klebstoff (6) ein doppelseitiger Klebstoff oder ein Klebeharz ist.

5. Steuergerät (1) nach einem der vorstehenden Ansprüche, **dadurch gekennzeichnet, dass** der Klebstoff (6) bei Raumtemperatur und einer Vibrationsfrequenz zwischen 20 kHz und 200 kHz einen Young'schen Modul zwischen 50 MPa und 5 GPa aufweist.

6. Steuergerät (1) nach einem der vorstehenden Ansprüche, **dadurch gekennzeichnet, dass** die dreidimensionale Berührungsschnittstelle (2) in Form eines feststehenden zylindrischen, kegelförmigen oder kegelstumpfförmigen Knopfes vorliegt.

7. Steuergerät (1) nach einem der vorstehenden Ansprüche, **dadurch gekennzeichnet, dass** die dreidimensionale Berührungsschnittstelle (2) in Form eines festen, quaderförmigen Cursors (20) vorliegt, entlang dessen sich ein Finger eines Benutzers bewegen kann.

8. Steuergerät (1) nach einem der vorstehenden Ansprüche, **dadurch gekennzeichnet, dass** die dreidimensionale Berührungsschnittstelle (2) in Form eines feststehenden Cursors (21) mit doppelter Führungsschiene vorliegt.

9. Steuergerät (1) nach einem der vorstehenden Ansprüche, **dadurch gekennzeichnet, dass** die dreidimensionale Berührungsschnittstelle (2) in Form eines feststehenden konkaven Cursors (22) vorliegt, entlang dessen sich ein Finger bewegen kann.

10. Steuergerät (1) nach einem der vorstehenden Ansprüche, **dadurch gekennzeichnet, dass** die elektromechanischen Aktuatoren (3) aus piezoelektrischen Keramiken bestehen, die mit Ultraschallfrequenzen zwischen 20 kHz und 200 kHz angesteuert werden.

11. Steuergerät (1) nach einem der Ansprüche 3 bis 10, **dadurch gekennzeichnet, dass** die dreidimensionale Berührungsschnittstelle (2) elektrische Drähte oder Leiterbahnen aufweist, die so angeordnet sind, dass ihre Kapazitätsänderung bei Berührung durch einen Finger eines Benutzers von kapazitiven Berührungssensoren erkannt werden kann, die in die Berührungsoberfläche (5) integriert sind.

## Claims

1. A control device (1) with haptic feedback, comprising a vibrating plate (4) having a touch surface (5) provided with touch sensors and capable of being vibrated at an ultrasonic frequency by electromechanical actuators (3) controlled by control electronics so as to generate, on said touch surface (5), an ultrasonic lubrication effect, **characterized in that** it further comprises a three-dimensional touch interface (2) that is devoid of any actuator and of any moving part, fixed and secured to said touch surface (5) by an adhesive (6) chosen to transmit the ultrasonic vibration generating the ultrasonic lubrication effect from said touch surface (5) to said three-dimensional touch interface (2), wherein said ultrasonic lubrication effect is communicated from said touch surface (5) to a digit of a user via said three-dimensional touch interface (2) when said digit of the user touches or swipes said three-dimensional touch interface (2).

2. The control device (1) as claimed in claim 1, wherein said three-dimensional touch interface (2) is a passive element, devoid of any electronic component.

3. The control device (1) as claimed in any of the preceding claims, wherein the three-dimensional touch interface (2; 20; 21; 22) is made of wood, rigid plastic, or metal.

4. The control device (1) as claimed in any of claims 1 to 3, wherein the adhesive (6) is a double-sided adhesive or an adhesive resin.

5. The control device (1) as claimed in any of the preceding claims, wherein the adhesive (6) has a Young's modulus between 50 MPa and 5 GPa at ambient temperature and at a vibrational frequency between 20 kHz and 200 kHz.

6. The control device (1) as claimed in any of the preceding claims, wherein the three-dimensional touch interface (2) is in the form of a fixed cylindrical, conical, or frustoconical button.

7. The control device (1) as claimed in any of the preceding claims, wherein the three-dimensional touch interface (2) is in the form of a fixed parallelepipedal slide-control (20) along which a digit of a user can move.

8. The control device (1) as claimed in any of the preceding claims, wherein the three-dimensional touch interface (2) is in the form of a fixed slide-control (21) with a double guide rail.

9. The control device (1) as claimed in any of the preceding claims, wherein the three-dimensional touch interface (2) is in the form of a fixed concave slide-control (22) along which a digit of user can move.

10. The control device (1) as claimed in any of the preceding claims, wherein the electromechanical actuators (3) comprise piezoelectric ceramics operated at ultrasonic frequencies between 20 kHz and 200 kHz.

11. The control device (1) as claimed in any of claims 3 to 10, wherein the three-dimensional touch interface (2) comprises electric wires or tracks arranged in such a way that variation in their capacitance upon contact with a digit of a user can be detected by capacitive touch sensors integrated into the touch surface (5).
